## Europäisches Patentamt
## European Patent Office
## Office européen des brevets

(19)

(11) Numéro de publication : **0 037 293**
**B1**

(12)

# FASCICULE DE BREVET EUROPÉEN

(45) Date de publication du fascicule du brevet :
**11.05.83**

(51) Int. Cl.³ : **B 62 D 65/00**

(21) Numéro de dépôt : **81400293.7**

(22) Date de dépôt : **26.02.81**

(54) **Balancelle polyvalente pour chaînes d'assemblage de produits manufacturés, notamment de véhicules automobiles.**

(30) Priorité : **02.04.80 FR 8007463**

(43) Date de publication de la demande :
**07.10.81 Bulletin 81/40**

(45) Mention de la délivrance du brevet :
**11.05.83 Bulletin 83/19**

(84) Etats contractants désignés :
**AT BE CH DE GB IT LI LU NL SE**

(56) Documents cités :
**DE A 2 600 348**
**DE C 765 899**
**US A 2 796 973**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Picaud, Emile**
**3, rue Danton**
**F-78370 Plaisir (FR)**

(74) Mandataire : **Ancel, Roger et al**
**R.N.U.R Service 0804 Boîte postale 103**
**F-92109 Boulogne-Billancourt (FR)**

Jouve, 18, rue St-Denis, 75001 Paris, France

# Balancelle polyvalente pour chaînes d'assemblage de produits manufacturés, notamment de véhicules automobiles

La présente invention se rapporte à une balancelle polyvalente pour chaînes d'assemblage de produits manufacturés, et notamment pour chaînes de production de véhicules automobiles.

L'expérience montre qu'une grande diversité de systèmes et moyens de translation sont employés lors de l'élaboration de certains produits manufacturés relativement volumineux et complexes, et en particulier des véhicules automobiles depuis le début d'assemblage des caisses en blanc jusqu'à la sortie des véhicules en fin de chaîne de finition. C'est ainsi que sont successivement et/ou alternativement utilisés des convoyeurs aériens et circuits monorails avec palans, balancelles et palonniers, et des chaînes au sol, à tabliers, à galets de roulement et voie de guidage, à rouleaux commandés ou libres, faisant indifféremment intervenir des luges, des traîneaux, des chariots tractés ou poussés, etc... Il en résulte la mise en œuvre d'une importante variété de matériels, dont il est souvent nécessaire de recycler à vide les éléments mobiles en fin de chaque tronçon d'installation, génératrice de nombreuses manipulations et manutentions mécanisées ou manuelles entre ces différents tronçons, et grevant les coûts d'étude, de réalisation, de fonctionnement et d'entretien de telles chaînes de production.

Le but de la présente invention est de remédier aux inconvénients précités par l'utilisation sur l'ensemble de la chaîne d'assemblage d'un moyen de translation standard unique, apte à procurer cependant une liberté d'accès optimale à la totalité du produit tout au long de ses différentes phases d'assemblage, et ceci aussi bien pour le personnel servant que pour les moyens d'alimentation en pièces détachées et les outillages.

Le convoyeur aérien à balancelles constitue apparemment le système de translation le plus approprié pour répondre à ces critères, car il offre une très grande souplesse de positionnement dans l'espace, selon les nécessités, des produits à assembler, rendant ainsi ergonomiquement fiables, à hauteur humaine normale, toutes les opérations manuelles à pratiquer sur ces produits, et ce sans avoir recours à d'importants travaux de génie civil pour l'implantation de la chaîne de production. En outre, une telle installation, de par les investissements plus modestes et les moindres compétences techniques qu'elle implique, est particulièrement appropriée à la réalisation d'usines de montage dans les pays en voie de développement.

La demande de brevet allemand n° 2 600 348 décrit une balancelle pour chaînes d'assemblage de véhicules automobiles, comportant un élément supérieur d'accrochage à un dispositif d'entraînement par convoyeur aérien, et se composant essentiellement de deux éléments porteurs verticaux, approximativement en forme de C largement ouvert, reliant chacun séparément l'élément supérieur d'accrochage à au moins un plot inférieur distinct d'ancrage pour la structure des véhicules à assembler. Cependant, ces éléments porteurs sont rigidement solidaires desdits élément supérieur d'accrochage et plot inférieur d'ancrage, et de ce fait ne peuvent pas s'éclipser pour autoriser un accès aisé à la totalité des produits à assembler, et en particulier dégager entièrement leur partie avant ou arrière, notamment lors de l'approvisionnement d'éléments de grandes dimensions ou pour faciliter l'évacuation en fin de chaîne des produits terminés.

La balancelle polyvalente pour chaînes d'assemblage de produits manufacturés, notamment de véhicules automobiles, objet de la présente invention, comportant au moins un élément supérieur d'accrochage à un dispositif d'entraînement par convoyeur aérien, et composée de deux éléments porteurs verticaux, sensiblement en forme de C largement ouvert, reliant chacun séparément l'élément supérieur d'accrochage à au moins un plot inférieur distinct d'ancrage pour la structure de soubassement des produits à assembler, vise à remédier aux inconvénients précités par le fait que lesdits éléments porteurs (3) en forme d'arceaux sont indépendamment articulés autour d'un axe sensiblement vertical avec un grand débattement autorisant un accès aisé à la totalité desdits produits pendant l'ensemble de leur assemblage.

Selon un mode de réalisation préféré de l'invention, chacun des éléments porteurs en forme d'arceaux, respectivement situés à l'avant et à l'arrière de la balancelle, est directement monté pivotant sur l'élément supérieur d'accrochage, et articulé à son extrémité inférieure au centre d'un couple distinct de plots d'ancrage, l'élément de liaison entre lesdits couples de plots d'ancrage étant uniquement constitué, en période d'utilisation, par la structure de soubassement des produits à assembler, assurant ainsi une grande accessibilité aux parties inférieures de cette structure.

La compréhension de la présente invention sera facilitée par la description suivante d'un exemple non limitatif de réalisation d'une telle balancelle polyvalente pour chaînes d'assemblage de produits manufacturés, notamment de véhicules automobiles, en référence aux dessins annexés dans lesquels :

La figure 1 est une vue en perspective cavalière d'une balancelle polyvalente selon l'invention ;

Les figures 2a à 2f sont des vues schématiques en élévation illustrant différents stades successifs d'assemblage d'un véhicule automobile à l'aide d'une balancelle polyvalente selon l'invention.

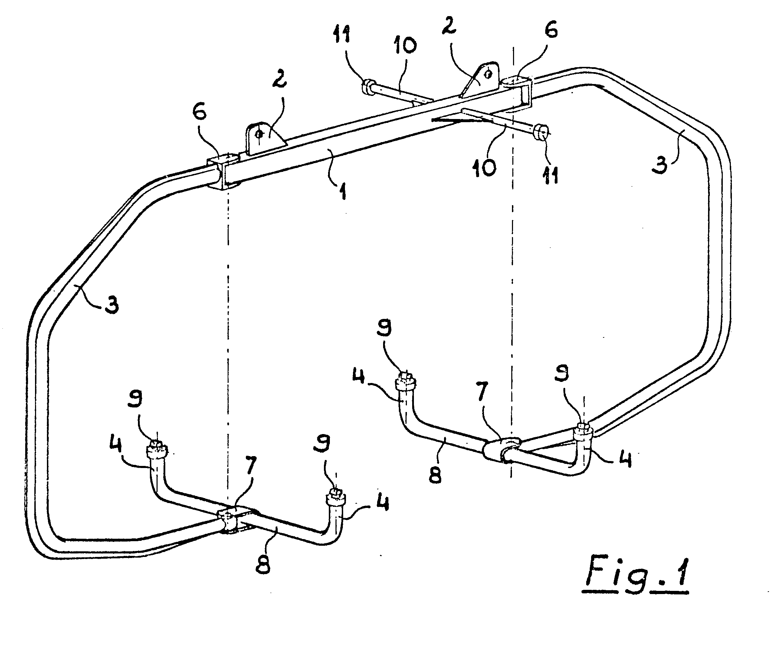

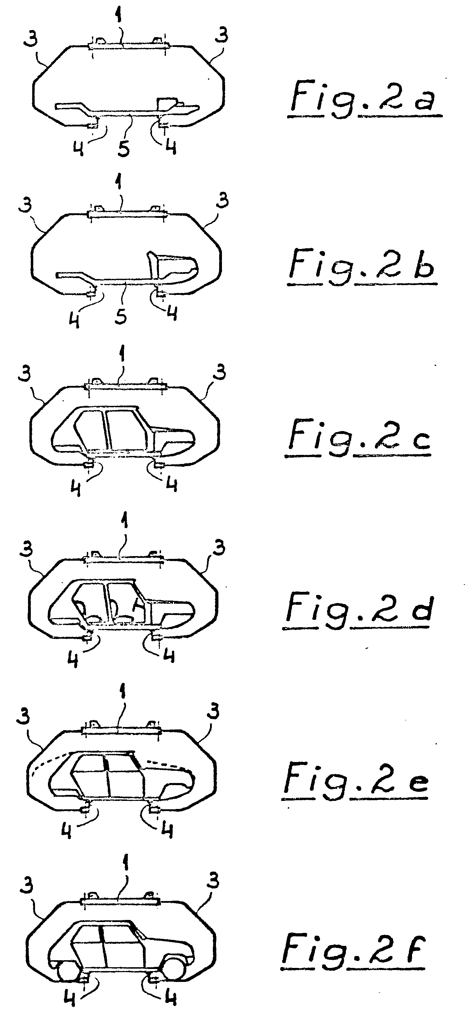

Ainsi qu'il apparaît plus particulièrement sur la figure 1, la balancelle comportant un élément supérieur 1 d'accrochage à l'aide de pattes 2 appropriées à un quelconque dispositif d'entraînement par convoyeur aérien, se compose de deux éléments porteurs verticaux 3, sensiblement en forme de C largement ouvert, respectivement situés à l'avant et à l'arrière de ladite balancelle, et reliant chacun séparément l'élément supérieur 1 d'accrochage à un couple distinct de plots d'ancrage 4 pour la structure de soubassement des produits à assembler, constituée dans le cas des figures 2a à 2f par le cadre-chassis 5 de véhicules automobiles. Conformément à l'objet de l'invention, chacun des deux éléments porteurs 3 en forme d'arceaux est respectivement monté pivotant, à l'aide d'une première chape 6, sur l'élément supérieur 1 d'accrochage, et à son extrémité inférieure, sur une seconde chape 7 solidarisée au centre d'un tube de liaison 8 relevé à ses extrémités pour définir chaque couple distinct de plots d'ancrage 4.

Les éléments porteurs 3 en forme d'arceaux sont donc indépendamment articulés autour d'un axe sensiblement vertical avec un grand débattement angulaire, de l'ordre de 180 degrés, autorisant ainsi que le montrent clairement les figures 2a à 2f un accès aisé à la totalité des produits, en l'occurence des véhicules automobiles, pendant l'ensemble de leur assemblage. En outre, le seul élément de liaison et de raidissement entre les couples distincts de plots d'ancrage 4 est uniquement constitué, en période d'utilisation, par la structure de soubassement 5 des produits à assembler, assurant également une grande accessibilité aux parties inférieures de cette structure, tout en allégeant les balancelles lors de leur circuit de retour à vide.

En règle générale, en position normale des éléments porteurs 3 en forme d'arceaux dans le plan de symétrie de la balancelle, les interventions peuvent s'effectuer sans aucune gêne sur 95 % environ de la surface totale des produits à assembler, et il suffit d'un faible déplacement desdits éléments porteurs 3, imprimé manuellement par un opérateur ou par un dispositif approprié implanté à l'endroit désiré sur la chaîne d'assemblage pour dégager les 5 % restants. Néanmoins, le grand débattement des éléments porteurs 3 en forme d'arceaux s'avère très utile pour dégager entièrement la partie avant ou arrière des produits à assembler, notamment lors de l'approvisionnement d'éléments de grandes dimensions ou pour faciliter l'évacuation en fin de chaîne des produits terminés.

Par mesure de sécurité chaque plot d'ancrage 4 est muni d'un moyen de verrouillage 9 de type approprié de la structure de soubassement 5 des produits à assembler sur la balancelle. De même l'élément supérieur 1 d'accrochage comporte une barre transversale horizontale 10 munie de galets 11 libres en rotation à chacune de ses extrémités, formant stabilisateur horizontal par coopération de manière connue en soi desdits galets 11 avec des rails de guidage latéraux, non représentés sur les figures annexées, solidaires de la structure de support du convoyeur aérien afin de prévenir tout balancement de l'ensemble pendant les interventions manuelles ou automatisées sur les produits en cours d'assemblage.

Lorsque les produits à assembler sont, tels que représentés aux figures 2a à 2f, des véhicules automobiles, les logements de leur structure de soubassement 5 pour les plots d'ancrage 4 et de verrouillage 9, pourront fort avantageusement être constitués par les logements de réception et de positionnement de tête de cric élévateur sous leur cadre-chassis.

La balancelle polyvalente, objet de la présente invention, procure donc par des moyens simples donc fiables et peu onéreux, une accessibilité optimale à la totalité des éléments des produits à assembler, tout au long des différentes phases de leur élaboration, que ce soit pour les opérateurs ou pour les moyens d'alimentation en pièces détachées et les outillages. Elle se prête donc aussi bien à une utilisation sur des chaînes relativement rudimentaires à majorité d'opérations manuelles, que sur des chaînes fortement automatisées nécessitant par exemple une grande liberté d'accès et de débattement pour les bras de travail d'automates programmables, chaque balancelle pouvant fort bien être efficacement immobilisée et stabilisée par des moyens appropriés, associés entre autres au stabilisateur horizontal décrit antérieurement, pendant les temps d'opération desdits automates.

Son domaine d'application ne se limite pas aux chaînes d'assemblage de véhicules automobiles, mais peut s'étendre, tel que déjà mentionné précédemment, à toutes chaînes de production de produits manufacturés notamment relativement volumineux et complexes.

**Revendications**

1. Balancelle polyvalente pour chaînes d'assemblage de produits manufacturés, notamment de véhicules automobiles, comportant au moins un élément supérieur d'accrochage (1) à un dispositif d'entraînement par convoyeur aérien, et composée de deux éléments porteurs (3) verticaux, sensiblement en forme de C largement ouvert, reliant chacun séparément l'élément supérieur d'accrochage (1) à au moins un plot inférieur (4) distinct d'ancrage pour la structure de soubassement (5) des produits à assembler, caractérisée par le fait que lesdits éléments porteurs (3) en forme d'arceaux sont indépendamment articulés autour d'un axe sensiblement vertical avec un grand débattement autorisant un accès aisé à la totalité desdits produits pendant l'ensemble de leur assemblage.

2. Balancelle polyvalente, selon la revendication 1, caractérisée par le fait que chacun des éléments porteurs (3) en forme d'arceaux, respectivement situés à l'avant et à l'arrière de la balancelle, est directement monté pivotant sur l'élément supérieur d'accrochage (1), et articulé à son extrémité inférieure au centre d'un couple (8) distinct de plots d'ancrage (4), l'élément de liaison entre lesdits couples (8) de plots d'ancrage (4) étant uniquement constitué, en période d'utilisation, par la structure de soubassement (5) des produits à assembler, assurant ainsi une grande accessibilité aux parties inférieures de cette structure.

**Claims**

1. A polyvalent suspended carrier for assembling chains adapted to be used for assembling manufactured products such as motor vehicles, comprising at least one upper hooking element (1) adapted to be hooked onto an aerial conveyor driving device, and constituted by two vertical supporting elements (3) having substantially the shape of a wide-open C, each one of which connects the upper hooking element (1) respectively to at least one lower stud (4) adapted to anchor the bottom structure (5) of the products to be assembled, characterized in that said bow-shaped supporting elements (3) are pivoted each with a large travelling length about a substantially vertical axis ensuring easy access to the entirety of said products during the complete assembly sequence thereof.

2. A polyvalent suspended carrier according to claim 1, characterized in that each one of said bow-shaped supporting elements (3), which are located at the front end and the rear end of the suspended carrier, respectively, is pivotally mounted on the upper hooking element (1) and hingedly connected at its lower end to the centre of a respective couple (8) of anchoring studs (4), the connecting element connecting said couples (8) of anchoring studs (4) being constituted exclusively, during utilisation, by the bottom structure (5) of the products to be assembled, thus ensuring great accessibility to the lower parts of said structure.

**Ansprüche**

1. Mehrzweckgehänge für Fliessbänder zum Montieren von Manufakturerzeugnissen, insbesondere von Kraftfahrzeugen, mit wenigstens einem oberen Aufhängeelement (1), das an einem Oberbandförderer aufhängbar ist und aus zwei vertikalen, wesentlich die Form eines weit offenen C aufweisenden Tragelementen (3) besteht, deren jedes getrennt das obere Aufhängeelement (1) mit wenigstens je einem unteren Ansatz (4) zum Verankern der Bodenstruktur (5) der zu montierenden Erzeugnisse verbindet, dadurch gekennzeichnet, dass die bogenförmigen Tragelemente (3) unabhängig voneinander um eine wesentlich vertikale Achse mit einem grossen Hubweg schwenkbar angeordnet sind, derart, dass die genannten Erzeugnisse während der gesamten Dauer der Montage gänzlich und leicht zugänglich sind.

2. Mehrzweckgehänge nach Anspruch 1, dadurch gekennzeichnet, dass jedes am vorderen Ende bzw. am hinteren Ende angeordnete bogenförmige Tragelement (3) unmittelbar schwenkbar an das obere Aufhängeelement (1) und an seinem unteren Ende an das Zentrum je eines Paares (8) von Verankerungsansätzen (4) angelenkt ist, wobei das zwischen den Paaren (8) von Verankerungsansätzen (4) angeordnete Verbindungselement während des Betriebs lediglich durch die Bodenstruktur (5) der zu montierenden Erzeugnisse gebildet ist, wodurch eine gute Zugänglichkeit der unteren Teile dieser Struktur erzielt wird.

Fig.1

0 037 293

Fig. 2a

Fig. 2b

Fig. 2c

Fig. 2d

Fig. 2e

Fig. 2f

2